# EUROPEAN PATENT SPECIFICATION

(11) **EP 0 708 228 B1**
(45) Date of publication and mention of the grant of the patent: **07.07.1999**
(21) Application number: 95830426.3
(22) Date of filing: 12.10.1995
(51) Int. Cl.: F01L 3/10, F01L 3/24, B23P 19/04, B23P 19/00

(54) **Method and device for automated assembling of cone half-bits of a valve of an internal combustion engine**
Verfahren und Vorrichtung zum automatischen Zusammenbauen der Ventilkeile einer Brennkraftmaschine
Méthode et dispositif pour l'assemblage automatiques des clavettes demi-lune de soupape de moteur à combustion interne

(30) Priority: 17.10.1994 IT TO940821
(43) Date of publication of application: 24.04.1996
(73) Proprietor: COMAU S.p.A., 10095 Grugliasco (Torino) (IT)
(72) Inventor: Di Dio, Leonardo (IT), I-10100 Torino (IT)
(74) Representative: Notaro, Giancarlo

(56) References cited:
- EP-A- 0 123 440
- EP-A- 0 424 320
- DE-C- 4 237 715
- PATENT ABSTRACTS OF JAPAN vol. 10, no. 163 (M-487), 11 June 1986 & JP-A-61 014825 (SANKIYOU SEIKI SEISAKUSHO K.K.), 23 January 1986,
- PATENT ABSTRACTS OF JAPAN vol. 9, no. 172 (M-397), 17 July 1985 & JP-A-60 043108 (MITSUBISHI), 7 March 1985,

## Description

The present invention relates to a method and a device for automated assembling of a valve in an internal combustion engine, said valve being of the type comprising a mushroom-shaped body including a stem on whose free end a stopper element is fixed having a conical inner surface which is tapered towards the head of the valve, and an annular outer flange for abutment of one or more valve closing helical springs, said stopper element being fixed on said end of the valve stem with the interposition of an annular body having an outer conical surface, also tapering towards the valve head, which is formed by two cone half-bits which are freely in contact with each other at a plane containing the axis of said annular body, said cone half-bits defining in their assembled condition one or more circumferential inner ribs which engage corresponding circumferential grooves provided on said end of the valve stem.

The present invention relates in particular to the problem of automated assembling of the two aforesaid cone half-bits and their associated stopper element.

Devices have been already made and used in the past which provide automatically for assembling the cone half-bits and the stopper element on the stem of a valve. Conventionally, the valves used in modern internal combustion engines for motor-vehicles have either one or three circumferential grooves on the free end of the stem which are engaged by an identical number of ribs formed on the inner surface of the two cone half-bits. Automated assembling of the cone half-bits on a stem provided with three grooves has some additional difficulty with respect to the case of a stem provided with a single groove, which has led up to now to the provision of different insertion devices and as a consequence of separate assembling stations, for the two different types of valves.

The object of the present invention is that of providing a method and a device for automated assembling of the cone half-bits and the stopper element of a valve which can be used on both the above mentioned types of valves, so as to obtain a relevant simplification and reduction of costs with respect to the technique which is presently in use, as well as an increase of efficiency of the assembling station.

In view of achieving this object, the invention provides a method for automated assembling of a valve of the type indicated at the beginning of the present description, characterized in that said two cone half-bits are assembled by making them to slide on the valve stem while keeping them temporarily in a diverging condition, with their ends of smaller diameter spaced apart from each other.

In a preferred embodiment, said two cone half-bits and the stopper element are mounted on the valve stem through the sequence of the following stages:
a) the valve is disposed in a seat in the engine and at least one valve closing spring is assembled around the valve stem, with one end of the spring resting against a support surface of the engine,
b) the stopper element is laid down on the end of the spring opposite to that resting on said support surface and the two cone half-bits are positioned in contact with each other, so as to form said annular body, within the conical inner surface of the stopper element and with their ends of lower diameter resting above the end surface of the stem,
c) an inserting device is provided comprising a tubular body movable along an axis coincident with the axis of the valve stem in the mounted condition of the latter and provided at a front end thereof which faces the valve with a plurality of equi-angularly spaced pushing fingers which are to engage the annular flange of the stopper element, as well as a plurality of jaws which are elastically deflectable outwardly in a radial direction, alternated to the pushing fingers and having inner inclined surfaces, diverging from each other in the direction of the valve head and adapted to engage the end surfaces of greater diameter of the two cone half-bits, said inserting device further including a pushing rod, slidably mounted within the tubular body and ending with a tip having a diameter corresponding to the inner diameter of said annular body defined by the two cone half-bits, said rod being biassed by spring means mounted within the tubular body towards an end position in which said tip projects from the front end of said tubular body,
d) said inserting device is positioned with its front head adjacent to the free end of the valve stem and coaxially therewith, with said pushing fingers in contact with the annular flange of the stopper element and said tip lying immediately above the two cone half-bits which rest on the end surface of the stem,
e) while keeping the valve in a fixed position, a movement is driven of the tubular body of the inserting device along with said pushing rod in the direction of the valve head, so that:
   - in a first stage, said pushing fingers cause a corresponding movement of the stopper element, compressing the valve closing spring, and said tip enters between the two cone half-bits,
   - in a second stage, the inclined surfaces of said resilient jaws engage from outside the ends of greater diameter of the two cone half-bits, so that said cone half-bits diverge from each other towards the valve head, with their ends of greater diameter resting on the tip of the pushing rod, and the ends of smaller diameter spaced from each other, and said jaws are radially deflected outwardly,
   - in a third stage, while the tip is stopped against the end surface of the stem, further movement of the tubular body of the inserting device, which takes place against the action of the spring means biassing the pushing rod, causes the lowering of the two cone half-bits, in the above described diverging condition, above the end of the stem, up to the moment in which the inner circumferential grooves of the two cone half-bits which are closer to the ends of greater diameter reach the groove of the stem which is closer to the end surface of the latter, so that the two cone half-bits snap in the final assembling position, with their ribs engaged in the corresponding grooves of the stem, under the bias of said resilient jaws which return to their undeformed position,
f) while keeping the tip of the pushing rod in contact with the valve stem, the tubular body of the inserting device is returned towards the starting position, so as to allow the stopper element to be forced above the two cone half-bits under the action of the valve closing spring.

The present invention also provides the above described inserting device which is used in the method of the invention.

Due to the above indicated features, it is possible to provide for automated assembling of the cone half-bits on the valve stem with a single type of inserting device, independently from the number of the circumferential grooves provided on the free end of the valve stem. Thus, engines having valves of different types can be assembled by the same equipment in the same assembling line.

The invention will be now described with reference to the annexed drawings, given purely by way of non limiting example, in which:
figure 1 is a cross-sectional view showing the inserting device according to the invention in a first stage of the assembling method according to the invention,
figure 2 is a view at an enlarged scale according to arrow II of figure 1,
figures 3 - 7 show at an enlarged scale and in cross section a detail of figure 1 in five subsequent stages of the method according to the invention, and
figure 8 is a cross-sectional view taken along line VIII-VIII of figure 5.

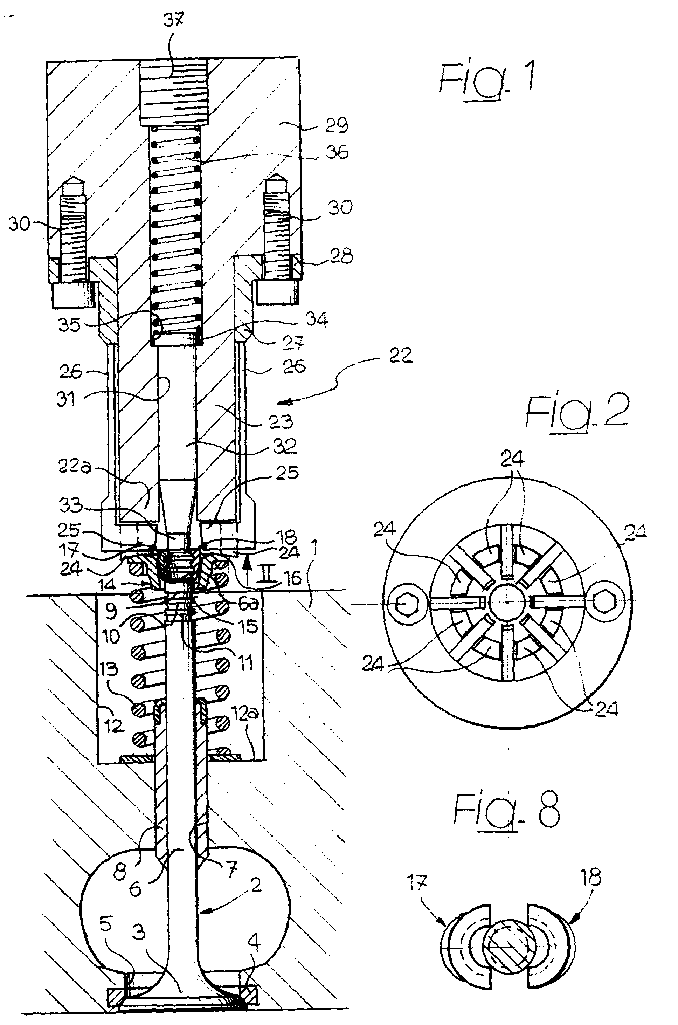

In figure 1, reference numeral 1 designates a portion of the cylinder head of an internal combustion engine provided with a valve 2. Valve 2 has a mushroom-shaped body, with a head 3 resting against an annular seat defined by a ring 4 mounted within the wall of an intake or exhaust passage 5 formed in the cylinder head 1. Valve 2 has a stem 6 which is slidably mounted within a whole 7 of the cylinder head 1 with the interposition of a bush 8 and having at its free end one or more circumferential grooves. Typically, the free end of the stem 6 has either one or three circumferential grooves. The illustrated example relates to the case of a stem provided with three circumferential grooves 9, 10 and 11. The following description however may be also applied to the case in which stem 6 is provided with a single circumferential groove.

Cylinder head 1 has a cavity 12 in which there projects the end portion of the stem 6 and receiving one or more valve closing helical springs 13 coaxial with each other. The illustrated example relates to the case of a single helical spring, which has one end resting against the bottom surface 12a of cavity 12.

In the final assembled condition of valve 2, a stopper element 14 (figure 7) is fixed on the free end of stem 6, having an inner conical surface 15 tapering towards the head 3 of the valve and an outer annular flange 16 against which the upper end (with reference to figures 1, 7) of spring 13 rests.

Stopper element 14 is fixed on the free end of stem 6 with the interposition of an annular conical body, also tapering towards head 3 of the valve, defined by two cone half-bits 17, 18 which, in the final assembling condition shown in figure 7, are freely in contact with each other at a plane containing the axis of stem 6.

In the initial stage of the method according to the invention, shown in figure 1, valve 2 is disposed in its seat, and spring 13 is assembled around stem 6 and placed in abutment against surface 12a of the cylinder head 1. At this time, stopper element 14 is placed on the upper end of spring 13 and the two cone half-bits 17, 18 are placed, in an assembled condition in which they define said annular body, above the end surface 6a of the stem 6 and within the inner conical surface of stopper element 14.

It is to be noted that the inner surface of the annular body defined by the two cone half-bits 17, 18 in their assembled condition has three circumferential ribs 19, 20, 21 which are to engage said circumferential grooves 9, 10, 11 (figure 7) in the final assembled condition of the cone half-bits.

Also with reference to figure 1, according to the invention, an inserting device generally designated by reference numeral 22 is provided comprising a tubular body 23 which is provided with its axis coincident with the axis of stem 6 and a front end 22a thereof facing the free end of stem 6 of valve 2, in the position shown in figure 1. With body 22 there are associated displacement control means of any known type (not shown) which serve for moving this body along the axis thereof, both downwardly and upwardly (with reference to figure 1). Said displacement control means are not shown both because, as indicated, they may be of any known type, and because, taken alone, they do not fall within the scope of the present invention and their deletion from the drawings renders the latter easier to understand. Naturally, in the case of simultaneous assembling of more valves on a cylinder head, it is possible to provide more inserting devices of the above indicated type which are driven simultaneously in any known way.

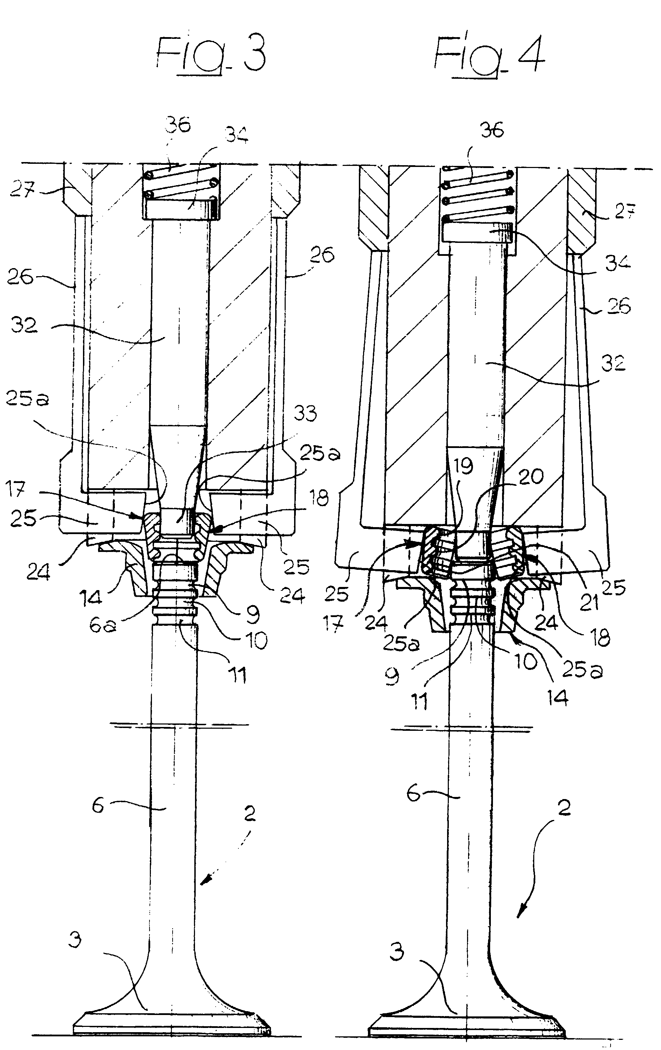

At its front end 22a, tubular body 23 is provided with a plurality of pushing fingers 24 (see also figure 2) which are equi-angularly spaced from each other, and are to engage the annular flange 16 of stopper element 14. The front end 22a is also provided with a plurality of jaws 25 which are outwardly resiliently deflectable in a radial direction, alternated to the pushing fingers 24. Jaws 25 are carried by longitudinal arms 26 which are resiliently deformable, whose ends opposite to jaws 25 are connected to a ring 27 having a base flange 28 fixed to a head 29 of the tubular body 23 by screws 30.

Within the inner cavity 31 of tubular body 23 there is slidably mounted a pushing cylindrical rod 32 ending with a tip 33 of a diameter corresponding to the inner diameter of the end of greater diameter of the annular body defined by the two cone half-bits 17, 18. The upper end of rod 32 has an enlarged head 34 which is biassed towards an end lower position in which it rests against an inner abutment surface 35 of the tubular body 23, by a helical spring 36. Spring 36 is interposed between head 34 of rod 32 and a body 37 screwed within a threaded end portion of the inner cylindrical cavity of the tubular body 23. In the lower end position, rod 32 has tip 33 which projects from front surface of tubular body 23 and is substantially contained within the space defined inside jaws 25. The latter have inner facing surfaces 25a (figure 7) which are inclined and diverge from each other towards the valve head.

In the initial stage of the method according to the invention, after that spring 13, stopper element 14 and the two cone half-bits 17, 18 have been positioned in sequence in the condition shown in figure 1, inserting device 22 is provided in the position also shown in this figure, with pushing fingers 24 in contact with the annular flanges 16 of the stopper element 14 and tip 33 of rod 32 in contact with the end of greater diameter of the annular body defined by the two cone half-bits 17, 18. In this condition, jaws 25 are not in contact with the cone half-bits.

Starting from this condition, and keeping valve 6 in a fixed position, the inserting device 22 is lowered (with reference to figure 1) so as to cause a lowering of tubular body 23 along with pushing rod 32 towards the head 3 of the valve.

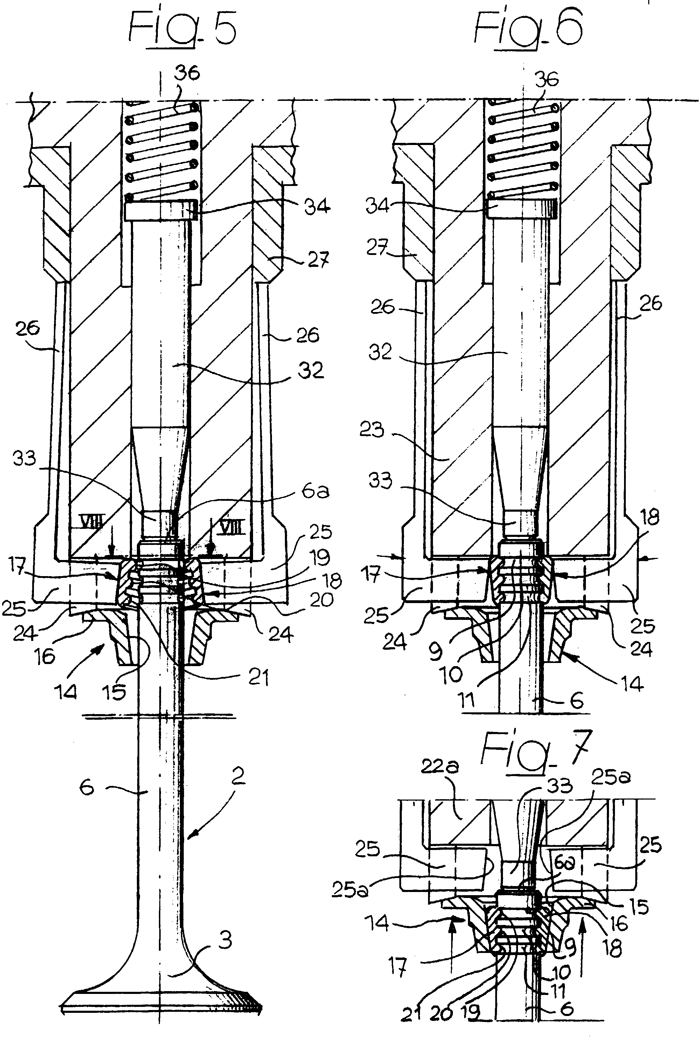

As a result of this movement, in a first stage (figure 3) pushing fingers 24 cause a corresponding lowering of the stopper element 14, compressing the valve closing spring 13 and tip 33 enters between the two cone half-bits 17, 18 resting above the end surface 6a of stem 6.

In a second stage (figure 4), inclined surfaces 25a of jaws 25 engage from outside the ends of greater diameter of the two cone half-bits 17, 18, so that the latter diverge from each other towards the valve head with their ends greater diameter resting on the tip 33 of rod 32, and the ends of lower diameter spaced from each other (figure 4). In this condition, jaws 25 are radially deflected outwardly.

In a third stage (figure 5) while tip 33 has stopped against the end surface 6a of stem 6, further movement of tubular body 23 of the inserting device, which takes place against the action of spring 36 biassing rod 32, causes the lowering of the two cone half-bits 17, 18, in the above described diverging condition, above the end of the stem (figure 5) up to when the circumferential ribs 19 closer to the ends greater diameter of the two cone half-bits 17, 18 reach groove 9 of the stem which is closer to the end surface of the latter, so that the two cone half-bits snap in the final assembled position, with their ribs 19, 20, 21 engaged within corresponding grooves 9, 10, 11 of stem 6, under the bias of said resilient jaws 25 which return to their undeformed condition (see figure 6).

Naturally, in the case stem 6 is of the type provided with a single groove, the above described operation remains the same.

At this time, while keeping tip of rod 32 in contact with stem 6 of the valve, tubular body 23 of the inserting device 22 is returned to the starting position, so as to allow the stopper element 14 to be forced above the two cone half-bits 17, 18, under the action of the valve closing spring 13, as shown in figure 7. In this condition, the inserting device may be raised completely and moved away from the valve.

As it clearly appears from the foregoing description, the method and device according to the invention enable automated assembling of the cone half-bits and the stopper element on a valve of an internal combustion engine in an efficient and reliable way and with an equipment which remains the same also when the type of valve is different (i.e. with a stem provided with one or three grooves).

Naturally, while the principle of the invention remains the same, the details of construction and the embodiments may widely vary with respect to what has been described and illustrated purely by way of example, without departing from the scope of the present invention.

## Claims

1. Method for automated assembling of a valve (2) in an internal combustion engine, said valve being of the type comprising a mushroom-shaped body including a stem (6) on whose free end a stopper element (14) is fixed having a conical inner surface (15) tapering towards the head (3) of the valve (2), and an annular outer flange (16) for abutment of one or more valve closing helical springs (13), said stopper element (14) being fixed on said end of the stem (6) of the valve (2) with the interposition of an annular body having an outer conical surface, also tapering towards the head (3) of the valve (2), formed by two cone half-bits (17, 18) which are freely in contact with each other at a plane containing the axis of said annular body, said cone half-bits (17, 18) defining, in their assembled condition, one or more circumferential inner ribs (19, 20, 21) which engage corresponding circumferential grooves (9, 10, 11) provided on said end of the stem (6) of the valve (2),
characterized in that said two cone half-bits (17, 18) are mounted by making them to slide on the stem of the valve while keeping them temporarily in a diverging condition, with their ends of lower diameter spaced apart from each other.

2. Method according to claim 1, characterized in that said cone half-bits (17, 18) and the stopper element (14) are mounted on the stem (6) of the valve (2) through the sequence of the following stages:
a) the valve (2) is disposed in a seat in the engine and at least one valve closing spring (13) is assembled around the valve stem (6), with one end of the spring (13) resting against a support surface (12a) of the engine,
b) the stopper element (14) is placed on the end of the valve closing spring (13) opposite said support surface (12a) and the two cone half-bits (17, 18) are placed in contact with each other, so that they form said annular body, within the conical inner surface (15) of the stopper element (14) and with their ends of smaller diameter resting on the end surface (6a) of the stem (6),
c) an inserting device (22) is provided, comprising a tubular body (23) movable along an axis coincident with the axis of the stem (6) of the valve (2) in the assembled condition of the latter and provided at its front end (22a) facing the valve (2) with a plurality of pushing fingers (24) which are equi-angularly spaced from each other, and are to engage the annular flange (16) of the stopper element (14), as well as a plurality of jaws (25) which are resiliently deflectable outwardly in a radial direction, alternated to the pushing fingers (24) and having inner inclined surfaces (25a), diverging from each other towards the valve head and adapted to engage the end surfaces of greater diameter of the two cone half-bits (17, 18), said inserting device (22) further including a pushing rod (32), slidably mounted within the tubular body (23) and ending with a tip (33) of a diameter corresponding to the inner diameter of said annular body defined by the two cone half-bits (17, 18), said rod (32) being biassed by spring means (36) mounted within the tubular body (23) towards an end position in which said tip (33) projects from the front end (22a) of said tubular body,
d) said inserting device (22) is positioned with its front end (22a) adjacent to the free end of the stem (6) of the valve (2) and coaxially therewith, with said pushing fingers (24) in contact with the annular flange (16) of the stopper element (14), and said tip (33) immediately above the two cone half-bits (17, 18) resting on the end surface (6a) of the stem,
e) while keeping the valve in a fixed position, a movement is driven of the tubular body (23) of the inserting device (22) along with said pushing rod (32), towards the valve head (3), so that:
- in a first stage, said pushing fingers (24) cause a corresponding movement of the stopper element (14), compressing the valve closing spring (13), and said tip (33) enters between the two cone half-bits (17, 18),
- in a second stage, the inclined surfaces (25a) of said resilient jaws (25) engage from outside the ends of greater diameter of the two cone half-bits (17, 18), so that said cone half-bits diverge from each other towards the valve head (3), with the ends of greater diameter resting on the tip (33) of the pushing rod (32), and the ends of smaller diameter spaced apart from each other, and said jaws (25) are radially deflected outwardly,
- in a third stage, while the tip (33) has stopped against the end surface (6a) of the stem (6), further movement of the tubular body (23) of the inserting device (22), which takes place against the action of the spring means (36) biassing the pushing rod (32), causes lowering of the two cone half-bits (17, 18), in the above described diverging condition, above the end of the stem (6) up to when the inner circumferential ribs (19) of the two cone half-bits (17, 18) which are closer to the end of greater diameter reach the groove (9) of the stem (6) closer to the end surface (6a) of the latter, so that the two cone half-bits (17, 18) snap in the final assembled position, with their ribs (19, 20, 21) engaged within corresponding grooves (9, 10, 11) of the stem (6), under the action of said resilient jaws (25) which return to their undeformed position,
f) while keeping the tip (33) of the pushing rod (32) in contact with the stem (6) of the valve (2), the tubular body (23) of the inserting device (22) is returned towards the starting position, so as to allow the stopper element (14) to be forced on the two cone half-bits (17, 18) under the action of the valve closing spring (13).

3. Inserting device for automated assembling of the cone half-bits (17, 18) and the stopper element (14) on a valve of an internal combustion engine, said valve being of the type comprising a mushroom-shaped body including a stem (6) on whose free end a stopper element (14) is fixed having a conical inner surface (15) tapering towards the valve head (3) and an outer annular flange (16) for abutment of one or more valve closing helical springs (13), said stopper element (14) being fixed on said end of the stem (6) of the valve with the interposition of an annular body having a conical outer surface, also tapering towards the valve head (3), formed by two cone half-bits (17, 18) which are freely in contact with each other at a plane containing the axis of said annular body, said cone half-bits defining, in their assembled condition, one or more inner circumferential ribs (19, 20, 21) which engage corresponding circumferential grooves (9, 10, 11) provided on said end of the stem (6) of the valve (2),
characterized in that said inserting device (22) comprises means for assembling said cone half-bits (17, 18) making them to slide on the stem of the valve while keeping them in a diverging condition, with their ends of lower diameter spaced apart from each other.

4. Device according to claim 3, characterized in that said inserting device comprises a tubular body (23) adapted to be moved along an axis coincident with the axis of the stem (6) of the valve and provided at a front end (22a) thereof with a plurality of pushing fingers (24) which are equi-angularly spaced and are to engage the annular flange (16) of the stopper element (14), as well as with a plurality of jaws (25) which are resiliently deflectable outwardly in a radial direction, alternated to pushing fingers and having inner inclined surfaces, diverging from each other in the direction of the head (3) of the valve (2) and adapted to engage the end surfaces of greater diameter of the two cone half-bits, said inserting device including also a pushing rod (32) slidably mounted within the tubular body (23) and ending with a tip (33) of a diameter corresponding to the inner diameter of said annular body defined by the two cone half-bits (17, 18), said rod (32) being biassed by spring means (36) mounted in the tubular body (23) towards an end position in which said tip (53) projects from the front end (22a) of said tubular body (23).

5. Device according to claim 4, characterized in that said jaws (25) include longitudinal arms (26) which are resiliently deflectable, having their ends opposite to the jaws (25) connected to a ring (27) fixed to said tubular body (23) of the inserting device (22).

6. Device according to claim 5, characterized in that each jaw has a substantially L-shaped body with a portion defined by said resiliently deflectable longitudinal arm (26), and the other portion defined by the jaw itself (25) extending above the front end surface (22a) of said tubular body (23).

## Patentansprüche

1. Verfahren zum automatischen Zusammenbauen eines Ventils (2) in einer internen Verbrennungskraftmaschine, wobei das Ventil von dem Typ ist, welcher einen pilzförmigen Körper, der einen Schaft (6) einschließt, umfaßt, an dessen freiem Ende ein Anschlagelement (14) fixiert ist, welches eine konische innere Oberfläche (15), die sich zum Kopf (3) des Ventils (2) hin verjüngt, und einen ringförmigen äußeren Flansch (16) zum Anschlagen von einer oder mehreren Ventilschließschraubenfedern (13) aufweist, wobei das Anschlagelement (14) an dem Ende des Schaftes (6) des Ventils (2) unter Einfügung eines ringförmigen Körpers fixiert ist, welcher eine äußere konische Oberfläche aufweist, die sich auch in Richtung des Kopfes (3) des Ventils (2) verjüngt, die durch zwei Konushalbenden (17, 18) gebildet ist, welche frei miteinander in Kontakt sind in einer Ebene, welche die Achse des ringförmigen Körpers enthält, wobei die Konushalbenden (17, 18) in ihrem zusammengesetzten Zustand eine einzige oder mehrere innere Umfangsrippen (19, 20, 21) definieren, welche mit korrespondierenden Umfangsnuten (9, 10, 11) in Eingriff sind, die am Ende des Schafts (6) des Ventils (2) vorgesehen sind,
dadurch gekennzeichnet, daß die zwei Konushalbenden (17, 18) eingebaut werden durch deren Ausgestaltung zum Gleiten am Schaft des Ventils, während sie zeitweilig im getrennten Zustand gehalten werden mit ihren Enden von geringerem Durchmesser voneinander beabstandet.

2. Verfahren gemäß Anspruch 1, dadurch gekennzeichnet, daß die Konushalbenden (17, 18) und das Anschlagelement (14) an dem Schaft (6) des Ventils (2) durch Abfolge der folgenden Stufen angebaut werden:
a) das Ventil (2) wird in einem Sitz in der Maschine angeordnet, und zumindest eine Ventilschließfeder (13) wird um den Ventilschaft (6) montiert, wobei ein Ende der Feder (13) an einer Stützoberfläche (12a) der Maschine anliegt,
b) das Anschlagelement (14) wird an dem Ende der Ventilschließfeder (13) entgegengesetzt der Stützoberfläche (12a) plaziert und die zwei Konushalbenden (17, 18) werden in Kontakt miteinander plaziert, so daß sie den ringförmigen Körper bilden innerhalb der konischen inneren Oberfläche (15) des Anschlagelements (14), und wobei ihre Enden von kleinerem Durchmesser auf den Endoberflächen (6a) des Schaftes (6) ruhen,
c) eine Einsetzvorrichtung (22) wird vorgesehen, welche einen röhrenförmigen Körper (23) aufweist, der entlang einer Achse, welche mit der Achse des Schaftes (6) des Ventils (2) im zusammengebauten Zustand des letztgenannten zusammenfällt, bewegbar ist und an seinen vorderen Ende (22a), welches zu dem Ventil (2) zeigt, mit einer Mehrzahl von drückenden Fingern (22) versehen ist, welche gleichwinkelig voneinander beabstandet sind, und welche vorhanden sind, um in den ringförmigen Flansch (16) des Anschlagelementes (14) einzugreifen, als auch eine Mehrzahl von Klauen (25) umfaßt, welche federnd nach außen in eine radiale Richtung ablenkbar sind, alternierend mit den drückenden Fingem (24), und welche innere geneigte Oberflächen (25a) aufweisen, welche sich voneinander in Richtung des Ventilkopfes entfernen, und die angepaßt sind, um in die Endoberflächen des größeren Durchmessers der zwei Konushalbenden (17, 18) einzugreifen, wobei die Einsetzvorrichtung (22) weiter eine drückende Stange (32) einschließt, welche innerhalb des röhrenförmigen Körpers (23) gleitend eingebaut ist und mit einer Spitze (33) endet mit einem Durchmesser, welcher dem inneren Durchmesser des durch die zwei Konushalbenden (17, 18) definierten ringförmigen Körpers entspricht, wobei die Stange (32) durch Federmittel (36), welche innerhalb des röhrenförmigen Körpers (23) eingebaut sind, in Richtung einer Endposition vorgespannt ist, in welcher die Spitze (33) von dem vorderen Ende (22a) des röhrenförmigen Körpers vorsteht,
d) diese Einsetzvorrichtung (22) ist mit ihrem vorderen Ende (22a) benachbart zu dem freien Ende des Schaftes (6) des Ventils (2) und koaxial damit angeordnet mit den drückenden Fingern (24) in Kontakt mit dem ringförmigen Flansch (16) des Anschlagelementes (14) und der Spitze (33) unmittelbar oberhalb der zwei Konushalbenden (17, 18), welche auf der Endoberfläche (6a) des Schaftes ruhen,
e) während das Ventil in einer fixierten Position gehalten wird, wird eine Bewegung auf den röhrenförmigen Körper (23) der Einsetzvorrichtung (22) entlang mit der drückenden Stange (32) zu dem Ventilkopf(3) ausgeübt, so daß:
- in einer ersten Stufe die drückenden Finger (24) eine entsprechende Bewegung des Anschlagelementes (14) bewirken, wobei sie die Ventilschließfeder (13) zusammendrükken, und die Spitze (33) zwischen die zwei Konushalbenden (17, 18) eintritt,
- in einer zweiten Stufe die geneigten Oberflächen (25a) der federenden Klauen (25) von außen mit den Enden des größeren Durchmessers der zwei Konushalbenden (17, 18) eingreifen, so daß die Konushalbenden sich voneinander zu dem Ventilkopf (3) wegbewegen, wobei die Enden des größeren Durchmessers auf der Spitze (33) der drückenden Stange (32) ruhen, und die Enden des kleineren Durchmessers voneinander beabstandet sind, und die Klauen (25) radial nach außen abgelenkt werden,
- in einer dritten Stufe, wenn die Spitze (33) gegen die Endoberfläche (6a) des Schaftes (6) angeschlagen hat, die weitere Bewegung des röhrenförmigen Körpers (23) der Einsetzvorrichtung (22),welche entgegen der Wirkung der Federmittel (36) geschieht, die die drückende Stange (32) vorspannt, eine Absenkung der zwei Konushalbenden (17, 18) in den oben beschriebenen getrennten Zustand über das Ende des Schaftes (6) bewirkt, bis dann, wenn die inneren Umfangsrippen (19) der zwei Konushalbenden (17, 18), welche näher zum Ende mit dem größeren Durchmesser sich befinden, die Nut (9) des Schaftes (6) näher zur Endoberfläche (6a) des letzteren erreichen, so daß die zwei Konushalbenden (17, 18) in die letzte eingebaute Position schnappen, mit ihren Rippen (19, 20, 21) innerhalb der entsprechenden Nuten (9, 10, 11) des Schaftes (6) in Eingriff unter der Wirkung der federnden Klauen (25), welche in ihre unverformte Position zurückkehren,
f) während die Spitze (33) der drückenden Stange (32) in Kontakt mit dem Schaft (6) des Ventils (2) gehalten wird, wird der röhrenförmige Körper (23) der Einsetzvorrichtung (22) in seine Anfangsposition zurückgesetzt, um so dem Anschlagelement (14) zu gestatten, auf die zwei Konushalbenden (17, 18) unter Wirkung der Ventilschließfeder (13) gedrückt zu werden.

3. Einsetzvorrichtung zum automatischen Zusammenbau von Konushalbenden (17, 18) und dem Anschlagelement (14) auf ein Ventil einer internen Verbrennungskraftmaschine, wobei das Ventil von der Art ist, welche einen pilzförmigen Körper umfaßt, welcher einen Schaft (6) einschließt, an dessen freiem Ende ein Anschlagelement (14) fixiert ist, welches eine konische innere Oberfläche (15), die sich zum Ventilkopf (3) hin verjüngt und einen äußeren ringförmigen Flansch (16) zum Anschlag einer einzigen oder mehrerer Ventilschließschraubenfedern (13) aufweist, wobei das Anschlagelement (14) am Ende des Schaftes (6) des Ventils unter Einfügung eines ringförmigen Körpers fixiert ist, welcher eine konische äußere Oberfläche, die sich auch in Richtung des Ventilkopfs (3) hin verjüngt, aufweist, die durch zwei Konushalbenden (17, 18) gebildet ist, welche frei miteinander in Kontakt sind in einer Ebene, welche die Achse des ringförmigen Körpers enthält, wobei die Konushalbenden in ihrem zusammengesetzten Zustand eine einzige oder mehrere innere Umfangsrippen (19, 20, 21) definieren, welche mit entsprechenden Umfangsnuten (9, 10, 11), die am Ende des Schaftes (6) des Ventils (2) vorgesehen sind, in Eingriff sind,
dadurch gekennzeichnet, daß die Einsetzvorrichtung (22) Mittel zum Zusammenbau der Konushalbenden (17, 18) umfaßt, welche sie zum Gleiten auf dem Schaft des Ventils veranlassen, während diese in einem getrennten Zustand gehalten werden mit deren Enden von geringerem Durchmesser voneinander beabstandet.

4. Vorrichtung gemäß Anspruch 3, dadurch gekennzeichnet, daß die Einsetzvorrichtung einen röhrenförmigen Körper (23) umfaßt, der angepaßt ist entlang einer mit der Achse des Schaftes (6) des Ventils zusammenfallenden Achse bewegt zu werden, und welcher an einem Frontende (22a) davon mit einer Mehrzahl von drückenden Fingern (24) versehen ist, welche gleichwinkelig beabstandet sind und die in den ringförmigen Flansch (6) des Anschlagelements (14) eingreifen sollen, als auch mit einer Mehrzahl von Klauen (25), welche federnd nach außen ablenkbar in einer radialen Richtung sind, abwechselnd mit den drückenden Fingern, und welche innere geneigte Oberflächen aufweisen, welche voneinander wegdivergieren in Richtung des Kopfes (3) des Ventils (2) und welche angepaßt sind, um mit der Endoberfläche von größerem Durchmesser der zwei Konushalbenden in Eingriff zu stehen, wobei die Einsetzvorrichtung auch eine drükkende Stange (32) einschließt, welche gleitend innerhalb des röhrenförmigen Körpers (23) eingebaut ist und mit einer Spitze (33) eines dem inneren Durchmesser des röhrenförmigen Körpers, welcher durch die zwei Konushalbenden (17, 18) definiert ist, entsprechenden Durchmessers endet, wobei die Stange (32) durch Federmittel (36), welche in dem röhrenförmigen Körper (23) eingebaut sind, in Richtung einer Endposition vorgespannt ist, in welcher die Spitze (33) von dem Frontende (22a) des röhrenförmigen Körpers (23) vorsteht.

5. Vorrichtung gemäß Anspruch 4, dadurch gekennzeichnet, daß die Klauen (23) longitudinale Arme (26) einschließen, welche federnd ablenkbar sind, welche ihre Enden entgegengesetzt zu den Klauen (25) verbunden mit einem Ring (27) aufweisen, welcher an dem röhrenförmigen Körper (23) der Einsetzvorrichtung (22) fixiert ist.

6. Vorrichtung gemäß Anspruch 5, dadurch gekennzeichnet, daß jede Klaue einen im wesentlichen L-förmigen Körper aufweist mit einem Abschnitt, welcher durch den federnd ablenkbaren longitudinalen Arm (26) definiert wird, und der andere durch die Klaue selbst (25) definierte Abschnitt sich oberhalb der Frontendenoberfläche (22a) des röhrenförmigen Körpers (23) erstreckt.

## Revendications

1. Procédé d'assemblage automatique d'une soupape (2) dans un moteur à combustion interne, la soupape étant du type qui comprend un corps en forme de champignon qui possède une tige (6) à l'extrémité libre de laquelle est fixé un élément d'arrêt (14) ayant une surface interne conique (15) dont la dimension diminue progressivement vers la tête (3) de la soupape (2), et un flasque annulaire externe (16) destiné à être en butée contre un ou plusieurs ressorts hélicoïdaux (13) de fermeture de soupape, l'élément d'arrêt (14) étant fixé à l'extrémité de la tige (6) de la soupape (2) avec interposition d'un corps annulaire ayant une surface externe conique qui diminue aussi vers la tête (3) de la soupape (2) formée par deux demi-mors coniques (17, 18) qui sont librement en contact mutuel dans un plan contenant l'axe du corps annulaire, les demi-mors coniques (17, 18) délimitant, à leur état assemblé, une ou plusieurs nervures circonférentielles internes (19, 20, 21) qui coopèrent avec des gorges circonférentielles correspondantes (9, 10, 11) formées à l'extrémité de la tige (6) de la soupape (2),
caractérisé en ce que les deux demi-mors coniques (17, 18) sont montés par glissement sur la tige de la soupape avec maintien de ces demi-mors temporairement à l'état divergent, leurs extrémités de diamètre relativement petit étant distantes l'une de l'autre.

2. Procédé selon la revendication 1, caractérisé en ce que les demi-mors coniques (17, 18) et l'élément d'arrêt (14) sont montés sur la tige (6) de la soupape (2) au cours de la séquence d'étapes suivantes :
a) la soupape (2) est placée dans un siège dans le moteur et un ressort (13) de fermeture de soupape au moins est assemblé autour de la tige (6) de soupape, une première extrémité du ressort (13) étant en appui contre une surface de support (12a) du moteur,
b) l'élément d'arrêt (14) est placé à l'extrémité du ressort (13) de fermeture de soupape du côté opposé à la surface de support (12a) et les deux demi-mors coniques (17, 18) sont placés en contact mutuel, afin qu'ils forment le corps annulaire, à l'intérieur de la surface interne conique (15) de l'élément d'arrêt (14) et avec leurs surfaces de diamètre relativement petit en appui sur la surface d'extrémité (6a) de la tige (6),
c) un appareil d'insertion (22) est utilisé et comporte un corps tubulaire (23) mobile le long d'un axe qui coïncide avec l'axe de la tige (6) de la soupape (2) à l'état assemblé de cette dernière et ayant, à son extrémité avant (22a) tournée vers la soupape (2), plusieurs doigts (24) de poussée qui sont régulièrement espacés en direction angulaire les uns par rapport aux autres, et sont destinés à coopérer avec le flasque annulaire (16) de l'élément d'arrêt (14) ainsi que plusieurs mâchoires (25) qui peuvent fléchir élastiquement vers l'extérieur en direction radiale, en alternance avec les doigts de poussée (24), et ayant des surfaces internes inclinées (25a), divergeant l'une de l'autre vers la tête de soupape et destinées à être au contact des surfaces d'extrémité de plus grand diamètre des deux demi-mors coniques (17, 18), l'appareil d'insertion (22) comprenant en outre une tige (32) de poussée montée afin qu'elle coulisse dans le corps tubulaire (23) et aboutissant à un bout (33) de diamètre correspondant au diamètre interne du corps annulaire délimité par les deux demi-mors coniques (17, 18), la tige (32) étant rappelée par un dispositif à ressort (36) monté dans le corps tubulaire (23) vers une position d'extrémité dans laquelle le bout (33) dépasse de l'extrémité avant (22a) du corps tubulaire,
d) l'appareil d'insertion (22) est disposé avec son extrémité avant (22a) adjacente à l'extrémité libre de la tige (6) de la soupape (2) coaxialement à celle-ci, les doigts de poussée (24) étant au contact du flasque annulaire (16) de l'élément d'arrêt (14), et le bout (33) qui est immédiatement au-dessus des deux demi-mors coniques (17, 18) étant en appui sur la surface d'extrémité (6a) de la tige,
e) avec maintien de la soupape en position fixe, un mouvement est donné au corps tubulaire (23) de l'appareil d'insertion (22) avec la tige de poussée (32), vers la tête (3) de soupape, si bien que :
- dans une première étape, les doigts de poussée (24) provoquent un mouvement correspondant de l'élément d'arrêt (14) avec compression du ressort (13) de fermeture de soupape, le bout (33) entrant entre les deux demi-mors coniques (17, 18),
- dans une seconde étape, les surfaces inclinées (25a) des mâchoires élastiques (25) coopèrent depuis l'extérieur avec les extrémités de plus grand diamètre des deux demi-mors coniques (17, 18), si bien que les demi-mors coniques divergent l'un par rapport à l'autre vers la tête de soupape (3), les extrémités de diamètre relativement grand étant en appui sur le bout (33) de la tige de poussée (32), et les extrémités de petit diamètre étant distantes l'une de l'autre, les mâchoires (25) étant fléchies radialement vers l'extérieur,
- dans une troisième étape, alors que le bout (33) s'est arrêté contre la surface d'extrémité (6a) de la tige (6), un déplacement supplémentaire du corps tubulaire (23) de l'appareil d'insertion (22), réalisé malgré l'action antagoniste du dispositif à ressort (36) qui rappelle la tige de poussée (32), provoque un abaissement des deux demi-mors coniques (17, 18), à l'état divergent précité, au-dessus de l'extrémité de la tige (6) jusqu'à ce que les nervures circonférentielles internes (19) des deux demi-mors coniques (17, 18) qui sont plus proches de l'extrémité de plus grand diamètre atteignent la gorge (9) de la tige (6) plus près de la surface d'extrémité (6a) de celle-ci, si bien que les deux demi-mors coniques (17, 18) s'enclenchent en position assemblée finale, leurs nervures (19, 20, 21) étant au contact des gorges correspondantes (9, 10, 11) de la tige (6) sous l'action des mâchoires élastiques (25) qui reviennent à leur position non déformée, et
f) avec maintien du bout (33) de la tige de poussée (32) au contact de la tige (6) de la soupape (2), le corps tubulaire (23) de l'appareil d'insertion (22) est ramené vers la position initiale, afin que l'élément d'arrêt (14) puisse être chassé sur les deux demi-mors coniques (17, 18) sous l'action du ressort (13) de fermeture de soupape.

3. Appareil d'insertion destiné à l'assemblage automatique de demi-mors coniques (17, 18) et d'un élément d'arrêt (14) sur une soupape d'un moteur à combustion interne, la soupape étant du type qui comprend un corps en forme de champignon comportant une tige (6) à l'extrémité libre de laquelle est fixé un élément d'arrêt (14) ayant une surface interne conique (15) dont la dimension diminue vers la tête de soupape (3) et un flasque annulaire externe (16) destiné à être en butée contre un ou plusieurs ressorts hélicoïdaux (13) de fermeture de soupape, l'élément d'arrêt (14) étant fixé à l'extrémité de la tige (6) de la soupape avec interposition d'un corps annulaire ayant une surface externe conique qui diminue aussi vers la tête de soupape (3) formée par deux demi-mors coniques (17, 18) qui sont librement en contact mutuel dans un plan contenant l'axe du corps annulaire, les demi-mors coniques délimitant, à l'état assemblé, une ou plusieurs nervures circonférentielles internes (19, 20, 21) qui sont au contact de gorges circonférentielles correspondantes (9, 10, 11) formées à ladite extrémité de la tige (6) de la soupape (2),
caractérisé en ce que l'appareil d'insertion (22) comporte un dispositif d'assemblage des demi-mors coniques (17, 18) afin qu'ils coulissent sur la tige alors qu'ils sont maintenus à l'état divergent, leurs extrémités de diamètre relativement petit étant distantes l'une de l'autre.

4. Appareil selon la revendication 3, caractérisé en ce que l'appareil d'insertion comporte un corps tubulaire (23) destiné à être déplacé le long d'un axe qui coïncide avec l'axe de la tige (6) de la soupape et possédant, à une extrémité avant (22a), plusieurs doigts de poussée (24) qui sont espacés d'angles égaux et qui sont destinés à coopérer avec le flasque annulaire (16) de l'élément d'arrêt (14), et plusieurs mâchoires (25) qui peuvent fléchir élastiquement vers l'extérieur en direction radiale, alternant avec des doigts de poussée et ayant des surfaces internes inclinées, divergeant mutuellement dans la direction de la tête (3) de la soupape (2) et destinées à coopérer avec les surfaces d'extrémité de diamètre relativement grand des deux demi-mors coniques, l'appareil d'insertion comprenant aussi une tige de poussée (32) montée afin qu'elle coulisse dans le corps tubulaire (23) et se terminant à un bout (33) de diamètre correspondant au diamètre interne du corps annulaire délimité par les deux demi-mors coniques (17, 18), la tige (32) étant rappelée par un dispositif à ressort (36) monté dans le corps tubulaire (23) vers une position d'extrémité dans laquelle le bout (53) dépasse de l'extrémité avant (22a) du corps tubulaire (23).

5. Appareil selon la revendication 4, caractérisé en ce que les mâchoires (25) comportent des bras longitudinaux (26) qui peuvent fléchir élastiquement, ayant des extrémités opposées aux mâchoires (25) qui sont raccordées à un anneau (27) fixé au corps tubulaire (23) de l'appareil d'insertion (22).

6. Appareil selon la revendication 5, caractérisé en ce que chaque mâchoire a un corps ayant une forme pratiquement en L possédant une partie délimitée par le bras longitudinal (26) qui peut fléchir élastiquement et une autre partie délimitée par la mâchoire elle-même (25) qui s'étend au-dessus de la surface d'extrémité avant (22a) du corps tubulaire (23).
